# EUROPEAN PATENT APPLICATION

(11) **EP 2 597 897 A2**
(43) Date of publication of application: **29.05.2013**
(21) Application number: 12007873.8
(22) Date of filing: 22.11.2012
(51) Int. Cl.: H04W 4/18, H04W 4/02

(54) **Providing information to vehicles**

(30) Priority: 22.11.2011 US 201161562543 P
(71) Applicant: Sobkiewicz, Jan, 00-722 Warszawa (PL)
(72) Inventor: Giza, Leszek, 03141 Warszawa (PL)
(74) Representative: Grünecker, Kinkeldey, Stockmair & Schwanhäusser

(57) **Abstract**

A computer-implemented method on a device in a vehicle for sending information to another device in another vehicle, a computer-readable medium having computer-executable instructions that, when executed by a computer, performs the computer-implemented method and a device in a vehicle adapted to perform the computer-implemented method are provided. In particular, the computer-implemented method for sending information to another device in another vehicle records a voice message and determines a geographic position of the device in the vehicle. Location data is generated, wherein the location data comprises the determined geographic position of the device in the vehicle. Further, metadata is generated which is associated with the recorded voice message. A message comprising the voice message, the location data and the metadata is generated and sent to at least one of a central server and another device in another vehicle.

## Description

### BACKGROUND OF THE INVENTION

### 1. FIELD OF THE INVENTION

The invention generally relates to the distribution of information to devices in vehicles and more particularly to the distribution of audio information to devices in vehicles.

### 2. DESCRIPTION OF THE RELATED ART

More and more devices are able to determine their geographic position using a satellite based position determination technique, a Wi-Fi based position determination technique and/or a position determination technique based on a cellular network. Such devices are used among other things for navigation purposes in vehicles, ships and airplanes.

Modern turn-by-turn navigation solutions do not only guide the operator of such a device to a destination along a route, but also provide the operator with additional information associated with the route such as traffic information concerning the route or landmarks on the route. The traffic information is usually provided by a central entity which collects the information from third party entities such as the police or an automobile club. The third party entities usually provide the information with a certain delay. Similarly, information regarding landmarks are not always up to date.

### SUMMARY OF THE INVENTION

It is the object of the present invention to improve the efficiency of information delivery to devices in vehicles. This object is solved by the subject matter of the independent claims. Preferred embodiments are defined by the dependent claims.

A computer-implemented method on a device in a vehicle for sending information to another device in another vehicle, a computer-readable medium having computer-executable instructions that, when executed by a computer, performs the computer-implemented method and a device in a vehicle adapted to perform the computer-implemented method are provided. In particular, the computer-implemented method for sending information to another device in another vehicle records a voice message and determines a geographic position of the device in the vehicle. Location data is generated, wherein the location data comprises the determined geographic position of the device in the vehicle. Further, metadata is generated which is associated with the recorded voice message. A message comprising the voice message, the location data and the metadata is generated and sent to at least one of a central server and another device in another vehicle.

According to another embodiment, a computer-implemented method on a device in a vehicle, a computer-readable medium having stored computer-executable instructions that, when executed by a computer, cause the computer to perform the computer-implemented method and a device in a vehicle adapted to perform the computer-implemented method are provided. In particular, the computer-implemented method on the device in a vehicle receives a list of messages and the messages in the list of messages, wherein the list of messages hasbeen filtered based on at least one of a current geographic position, a past geographic position, a route and a destination of the device in the vehicle. Each message in the list of messages comprises a voice message and metadata associated with the voice message. At least one voice message of at least one received message is played back and metadata of at least one received message is accessed.

According to a further embodiment, a computer-readable medium having stored computer-executable instructions that, when executed by a computer, cause the computer to perform a computer-implemented method on a device in a vehicle. The method comprises receiving a list of other devices in other vehicles, each other device in the list of other devices in other vehicles being associated with at least one of a route and a destination that is within the current route or close to the current route of the device in the vehicle, displaying the list of other devices in other vehicles on the device in the vehicle; and communicating with at least one of the other devices in the list of other devices in other vehicles

Finally, according to a further embodiment, a server computer is provided which is adapted to receive a plurality of messages, wherein each message of the plurality of messages comprises a voice message, location data of a sender of the message and metadata associated with the voice message. The server maintains data associated with a plurality of devices in vehicles, wherein the data comprises for each device of the plurality of devices in vehicles location data of the device. The server determines recipients from the plurality of devices in vehicles for the received messages based on location data of senders of the messages and the maintained data. The server then generates, for each recipient, a list of messages, the list of messages listing all messages for which the respective device in the vehicle has been determined to be the recipient. Finally, the server sends at least one list of messages to at least one determined recipient.

### BRIEF DESCRIPTION OF THE INVENTION

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
Fig. 1 illustrates a system for improving information delivery to mobile devices according to an embodiment of the present invention;
Fig. 2 is a flowchart illustrating the provision of information from a mobile device and/or a non-mobile entity to one or more other mobile devices according to an embodiment of the present invention;
Fig. 3 is a flowchart illustrating the reception of information at a mobile device according to an embodiment of the present invention;
Fig. 4 is a flowchart illustrating the exchange of information between mobile devices according to an embodiment of the present invention; and
Fig. 5 is a flowchart illustrating the determination of recipients of voice messages according to an embodiment of the present invention.

### DETAILED DESCRIPTION OF THE INVENTION

The illustrative embodiments of the present invention will be described with reference to the Figure drawings, wherein like elements and structures are indicated by like reference numbers.

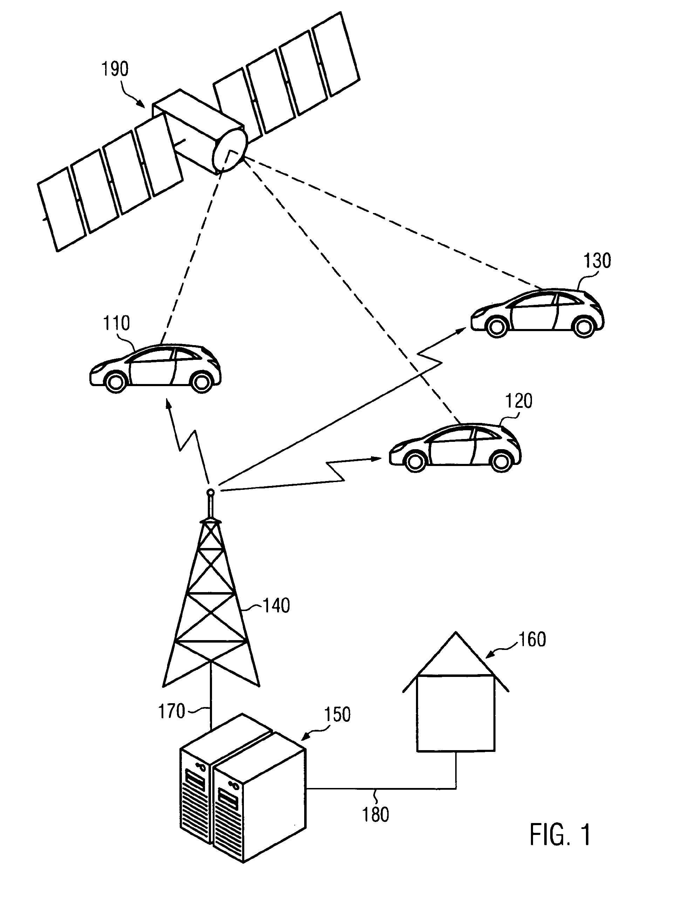

Figure 1 illustrates a system for improving information delivery to mobile devices according to an embodiment of the present invention. The system 100 may comprise a central server 150 which communicates via a cellular network with mobile devices 110, 120, 130. For instance, the central server 150 may be coupled via a cable connection 170 to a base station 140 of the cellular network which establishes a bi-directional communication link with the mobile devices 110, 120, 130.

The mobile devices 110, 120, 130 may be devices in vehicles as illustrated in Figure 1 and may be associated with a respective user or operator. A mobile device may, for instance, be a navigation device and/or route guidance device permanently installed in a vehicle together with a module which is adapted to communicate via a cellular network with the central server 150 or other mobile devices. The module may, for instance, be a mobile phone which couples via a wired or wireless interface, such as a Bluetooth interface, with the navigation device or a module permanently installed at the vehicle. As another example, a mobile device may be a mobile phone, a tablet computer or a mobile computer which can communicate with other mobile devices and the central server 150 using a cellular network and is adapted to determine its geographic position.

According to embodiments of the present invention, each of the mobile devices 110, 120, 130 is adapted to determine its geographic position using a satellite-based position determination technique, a Wi-Fi-based position determination technique, a position determination technique based on a cellular network and/or any other conventional technique suitable for determining the geographic position. For instance, each of the mobile devices 110, 120, 130 may receive GPS data from the GPS satellites 190 and may determine its geographic position based on the received GPS-data. In addition, each of the mobile devices 110, 120, 130 is adapted to communicate via a cellular network with the central server 150 and/or other mobile devices. Further, each of the mobile devices 110, 120, 130 may be adapted to record audio, e.g. by using a built-in microphone, a hands-free microphone, a Bluetooth headset, etc., to accept input of data, for instance via a (virtual) keyboard, to display information and to play back audio. Each of the mobile devices 110, 120, 130 may be a single device which provides such functionality or a combination of several devices coupled via wired and/or wireless interfaces which provide in combination the above described functionality.

In addition, some other entities 160 may be in communication with the central server 150 over a wired or wireless connection 180. Alternatively or additionally, the entities 160 may be in direct communication with the mobile devices 110, 120, 130 using, for instance, a cellular network. Such entities 160 may be non-mobile entities or devices within non-mobile entities which want to provide information to the mobile devices 110, 120 and 130. A non-mobile entity may be aware of its geographic position and may be adapted to record audio, e.g. by using a microphone, and to accept input of data

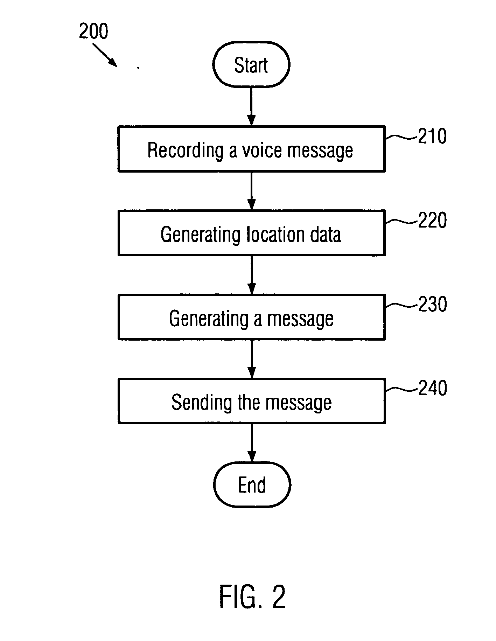

Referring now to Figure 2, a method is described for providing information from a mobile device 110, 120 and 130 and/or a non-mobile entity 160 to one or more other mobile devices 110, 120, 130 in the system 100. The method 200 will now be described with reference to a device which may be either a mobile device 110, 120, 130 or a non-mobile entity 160. At step 210, a user of the device 110, 120, 130, 160 may record an audio signal to the device 110, 120, 130, 160. The recorded signals may be encoded and processed by the device 110, 120, 130, 160 into a digital form referred to as voice message.

The recording of an audio signal may be initialized, according to an embodiment of the present invention, by tapping or double tapping on a touch sensitive screen of the device 110, 120, 130, 160. When using mobile devices 110, 120, 130, the screen may be a "radar" screen or "map" screen of the mobile device 110, 120, 130. A "radar" screen or "map" screen may be a display associated with navigational functionality of the mobile device 110, 120, 130. For instance, the message capture process may be triggered by a double tap on the "map" screen wherein the whole "map" screen can capture the gesture. When the device 110, 120, 130, 160 recognizes that a user wants to record a message, e.g. by detecting a double tap on a touch sensitive display, the device 110, 120, 130, 160 may respond to it by showing information that the recording is in progress. According to an embodiment, the user can finish recording when needed, for instance by once again double tapping on the touch sensitive screen or the device 110, 120, 130, 160 may finish recording automatically after a given period of time or when no further audio signals are detected for a predetermined period of time.

According to embodiments, the recorded voice message may, for instance, relate to road conditions observed by the user recording the voice message at the current or past geographic position of the mobile device recording the voice message, to information on the route guided by the mobile device on which the voice message is recorded etc. According to other embodiments, the recorded voice message may, for instance, relate to an advertisement of a non-mobile entity 160 such as a restaurant or shop.

At step 220, location data is generated. To this, the geographic position of the device 110, 120, 130, 160 is determined. In some embodiments for mobile devices 110, 120, 130, the speed and the direction of movement of the mobile device is also determined.

At step 230, a message is generated by the device 110, 120, 130, 160 which comprises the voice message and the location data. A message comprising at least a voice message and location data may also be referred to as a geotagged voice message. According to some embodiments, metadata is additionally generated. Such metadata may comprise at least one of an identification of the device 110, 120, 130, 160, such as a telephone number within a cellular network or an IP address of the device 110, 120, 130, 160, an identification of the originator (author) of the recorded voice message, a time of recording of the voice message, priority of the recorded voice message, category of the recorded voice message, group of the recorded voice message and intended recipients of the recorded voice message (also referred to as target audience). If a mobile device 110, 120, 130 generates the message, the metadata may also comprise at least one of a destination and a route of the mobile device 110, 120, 130. In those embodiments, where metadata is generated, the metadata may also be included in the message together with the location data and the voice message. The metadata may be input into the device 110, 120, 130, 160 by a user or operator of the device 110, 120, 130, 160. For mobile devices 110, 120 , 130, the destination and the route of the mobile device 110, 120, 130 may be added automatically to the metadata by the mobile device 110, 120, 130.

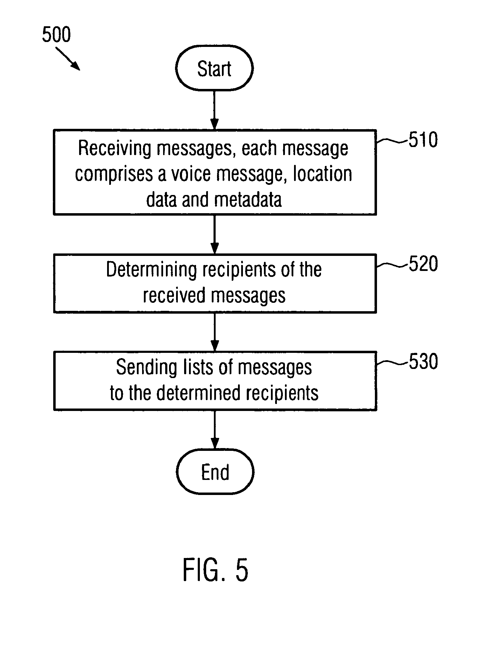

At step 240, the generated message is sent to at least one of a central server 150 and another mobile device 110, 120, 130. For instance, the message may be sent over a wireless, IP-based network such as a GSM data network. A recipient of the message sent at step 240 may be determined as described with reference to Figure 5 below.

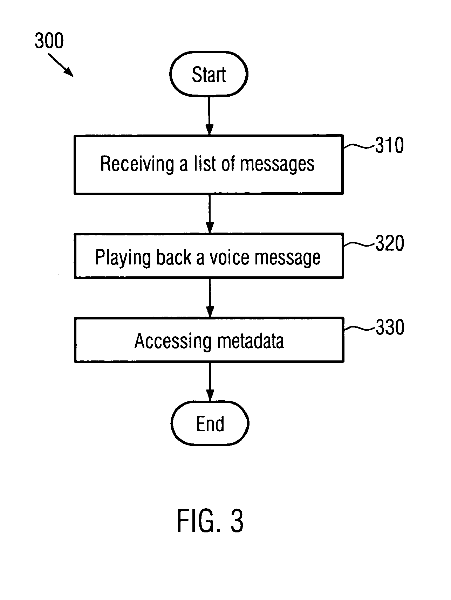

Referring now to Figure 3, a method is illustrated for receiving one or more messages at a mobile device 110 in the system 100, wherein each message comprises a voice message. Of course, each of the other mobile devices 120, 130 of Figure 1 is adapted to perform the method 300, too. However, for illustrative purposes, it is referred to mobile device 110 as receiving mobile device. The voice messages within the one or more messages may be generated as described with respect to Figure 2, for instance, at mobile devices 120 and/or 130 and/or at non-mobile entity 160. According to some embodiments, the received messages may be geotagged messages, i.e. the messages comprise location data in addition to the voice message.

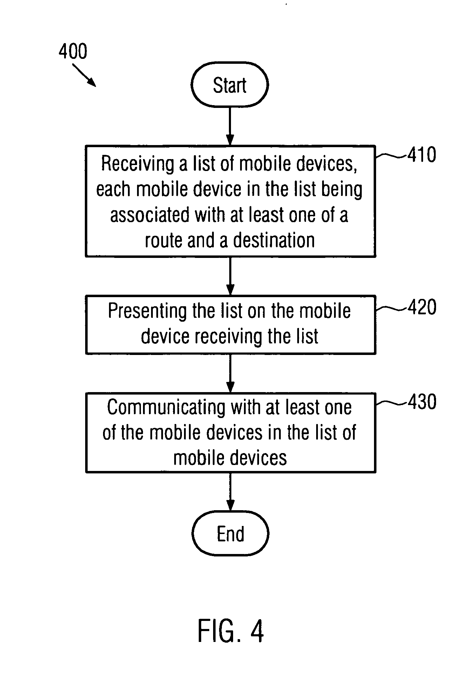

At step 310, a list of messages is received at the mobile device 110 from at least one of a central server 150 and another mobile device 120, 130. The list of messages may have been filtered based on at least one of a current geographic position, a past geographic position, a route and a destination of the mobile device 110 receiving the message. The list of messages may be received from a central server 150 which has determined the mobile device 110 to be a recipient of the list of messages as described below with reference to Figure 5 or from another mobile device 120, 130 which establishes a direct communication with the mobile device 110 as described below with reference to Figure 4.

The mobile device 110 may receive periodically or upon a request of a user of the mobile device 110 or in response to certain events, the list of messages. Additionally, if a message is directly received from another mobile device 120, 130 as described with respect to Figure 4, the other mobile device 120, 130 may establish a communication link to the mobile device 110. According to some embodiments information about all available and relevant voice messages is received at the mobile device 110 from the central server 150. Further, in some embodiments, firstly a lightweight representation of the messages may be received on the mobile device 110 followed by the messages themselves. For instance, firstly only the list of messages may be received at the mobile device 110, wherein the messages themselves are received at a second step. Thus, according to embodiments, both the list of messages and the messages in the list are received at the mobile device 110. In some embodiments, the user of the mobile device 110 may, for instance, select a message from the list of messages which is then downloaded from the central server 150. In other embodiments, the list of messages comprises the messages themselves.

According to some embodiments, each of the received messages also comprise metadata associated with the voice message within the received message such as the metadata generated at step 230 described with regard to Figure 2.

At step 320, at least one voice message within the received voice messages may be played back on the mobile device 110. The voice message may be played back automatically or the user of the mobile device 110 may manually select play or replay of the voice message. In embodiments where the user manually starts the play back of the voice message, the mobile device 110 may give an acoustic or visual indication to the user of the mobile device 110 that a voice message is available for play back when a list of messages is received.

At step 330, if available, the metadata of at least one of the received messages may be accessed. This may be done during play back of a voice message or at different times. The metadata information may comprise information such as category of the voice message, length of the voice message, creation time of the voice message, distance to the mobile device 120, 130 on which the voice message has been created, priority of the voice message, target audience of the voice message, group of the voice message, destination and/or route of the mobile device 120, 130 which has recorded the voice message. This metadata information may be displayed on the mobile device 110 or acoustically communicated.

In some embodiments, each of the received messages may comprise location data as generated, for instance, at step 220 at the mobile device 120, 130 or non-mobile entity 160. Hence, the location data may indicate a current geographic position of the mobile device 120, 130 which has generated the message or a geographic position of the non-mobile entity 160 which has generated the message. According to some embodiments, the mobile device 110 receiving the list of messages may access the location data within a message and display the location data separately from or together with the metadata of the message during play back of the voice message within the message and/or at another time.

In some embodiments, the list of messages may comprise only messages from mobile devices 120, 130 that share at least one of the current position, a destination and at least a part of a route with the mobile device 110 receiving the list of messages or that have a route close to the current route of the mobile device 110, wherein a route from the current geographic position of the mobile device 110 to the destination of the mobile device 110 is referred to as a current route of the mobile device 110. As known to those skilled in the art, a route in the context of navigation systems may be defined as a series of at least two waypoints. Hence, according to embodiments, a route of a mobile device 120, 130 may be close to the current route of the mobile device 110, if a distance between at least one waypoint of the current route of the mobile device 110 and at least one waypoint of the route of the other mobile device 120, 130 is within a predetermined threshold distance. In other embodiments, a route of a mobile device 120, 130 may be close to the current route of the mobile device 110, if a distance between at least one segment of the current route of the mobile device 110 and at least one segment of the route of the other mobile device 120, 130 is within a predetermined threshold distance. A segment of a route may be a line connecting two waypoints of the route. According to further embodiments, the list of messages may comprise in addition or only messages of non-mobile entities 160 that are within a predetermined range of the current position of the mobile device 110 receiving the list of messages.

Referring now to Figure 4, a method is illustrated for exchanging information between mobile devices 110, 120, 130 according to an embodiment of the present invention in the system 100. For illustrative purposes, it is referred to mobile device 110 as performing the method 400. Of course, each of the other mobile devices 120, 130 of Figure 1 is adapted to perform the method 400, too.

At step 410, a list of mobile devices 120, 130 is received wherein each mobile device 120, 130 in the list of mobile devices is associated with at least one of a current geographic position, a route and a destination that is within the current route or close to the current route of the mobile device 110, wherein a route from the current geographic position of the mobile device 110 to the destination of the mobile device 110 is referred to as a current route of the mobile device 110. As explained above, a route of a mobile device 120, 130 may be close to the current route of the mobile device 110, if a distance between at least one waypoint of the current route of the mobile device 110 and at least one waypoint of the route of the other mobile device 120, 130 is within a predetermined threshold distance. In other embodiments, a route of a mobile device 120, 130 may be close to the current route of the mobile device 110, if a distance between at least one segment of the current route of the mobile device 110 and at least one segment of the route of the other mobile device 120, 130 is within a predetermined threshold distance. According to some embodiments, the list of mobile devices may comprise mobile devices 120, 130 which have a current position on the route of the mobile device 110 or which had or will have a position within a given time period on the current route of the mobile device 110.

In some embodiments, each mobile device in the list may be associated with metadata such as any text information input by a user of the mobile device 120,130, destination and/or route of the mobile device 120, 130.

According to embodiments, the list may be generated on the central server 150 and send to the mobile device 110 as described with regard to Figure 5. According to alternate embodiments, the list may be generated on the mobile device 110 itself by filtering a list of messages, e.g. received in accordance with method 300 at step 310, with at least one of the current position, the current route and the destination of the mobile device 110. In these embodiments, the mobile device 110 may determine a current geographic position and/or a destination of the mobile device 110. The list may additionally be filtered by a time criteria. According to some embodiments the method 400 is performed together with method 300.

At step 420, the list of the mobile devices 120, 130 may be displayed on the mobile device 110 receiving the list. In some embodiments, the metadata associated with the mobile devices in the list is displayed, too.

At step 430, the mobile device 110 may communicate with at least one of the mobile devices 120, 130 in the list of mobile devices by establishing a peer to peer connection to the at least one other mobile device 120, 130. For instance, the mobile device 110 may communicate with one other mobile device or with a group of mobile devices. The method at the other mobile devices 120, 130 receiving the communication may be in an embodiment in accordance with method 300 described with regard to Figure 3.

The communication may be performed in real time or asynchronous, i.e. with a delay. The real time communication may be performed by using, for instance, a voice connection over a cellular network or by using voice over IP technology via an IP connection over a cellular network. In the asynchronous communication embodiments, mobile devices may exchange private voice messages. The messages are sent, received and played after being delivered to the mobile device 110, 120, 130.

According to some embodiments, the communication method may be determined automatically, for instance, based on the currently available bandwidth of the communication link, the quality of the internet connection over the cellular network and the available hardware. Alternatively, the user may choose manually the mode of communication.

In embodiments, the mobile device 110 may have an active connection to a cellular network, such as an IP-based connection. The list of mobile devices received at 410 may comprise for each mobile device 120, 130 in the list identification information on the mobile device, such as an IP address of the mobile device 120, 130 or a telephone number in a cellular network of the mobile device 120, 130.

Referring now to Figure 5, a method is described for determining recipients of voice messages in the system 100. In the following, the method is described as being performed on a central server 150. However, the method 500 may also be performed on a plurality of distributed mobile devices and/or stationary devices (distributed like a snowflake, a star or independent user agents having discovery capabilities).

At step 510, the central server 150 receives messages from mobile devices 110, 120, 130 and/or non-mobile entities 160. Each of the messages may have been generated in accordance with the method 200 of Figure 2. Each message may comprise a voice message and location data. In some embodiments, each message may also comprise metadata such as at least one of an identification of the device 110, 120, 130, 160, such as a telephone number within a cellular network or an IP address of the device 110, 120, 130, 160, an identification of the originator (author) of the recorded voice message, a time of recording of the voice message, priority of the recorded voice message, category of the recorded voice message, group of the recorded voice message and intended recipients of the recorded voice message (also referred to as target audience). If a mobile device 110, 120, 130 has generated the message, the metadata may also comprise at least one of a destination and a route of the mobile device 110, 120, 130.

At step 520, the central server 150 determines recipients of the received messages. According to an embodiment, the messages are filtered according to predetermined criteria. In some embodiments, the central server 150 maintains data associated with a plurality of mobile devices 110, 120, 130, wherein the data comprises for each mobile device 110, 120, 130 of the plurality of mobile devices at least one of location data of the mobile device and other data relating to the mobile device. In an embodiment, the other data may comprise parameters such as one or more of an area, a set geographic position of a mobile device and/or non-mobile entity, a route of a mobile device, a destination of a mobile device, a time period at which voice messages were recorded, a category of voice messages, priority of voice messages, target audience of voice messages, duration of voice messages and other. Discussing the parameter area briefly in more detail, a mobile device may want to receive messages from other mobile devices and/or non-mobile entities whose geographic position is within the area. According to embodiments, the area may be a circle around the current position of the mobile device having a given radius, wherein the given radius may, for instance, be set by a user of the mobile device.

Accordingly, in some embodiments, at step 520, recipients from the plurality of mobile devices 110, 120, 130 are determined for the received messages based on the location data of the senders of the messages and/or the metadata included in the messages and the maintained data. In some embodiments, the maintained data is compared with location data and/or the metadata. If any maintained data associated with a mobile device of the plurality of mobile devices 110, 120, 130 matches with the location data and/or the metadata included in a received message, the respective mobile device is determined to be a recipient of the message. For instance, if the geographic position of the sender of a message is within an area defined by the maintained data associated with a specific mobile device, the specific mobile device is determined as recipient of the message.

According to embodiments, a mobile device 110, 120, 130 may be determined as recipient for more than one message received at step 510. Accordingly, a list of messages may be generated at step 520 for each mobile device being recipient of at least one message. The list of messages lists all messages for which the respective mobile device has been determined to be the recipient. The list of messages may be sorted according to some criteria, for instance by relevance. As another example, messages from mobile devices and/or non-mobile entities nearest to a current position of the recipient may be first in the list. In other embodiments, the list may be sorted by the time of recording of the voice messages (ascending or descending), by priority of the recorded voice messages etc.

In some embodiments, the list of messages may only comprise messages of mobile devices having at least one of a current geographic position, a route and a destination that is within the current route or close to the current route of the recipient of the list. Further, the list of mobile devices may comprise for each mobile device in the list identification information on the mobile device, such as an IP address of the mobile device or a telephone number in a cellular network that enables the recipient of the list to establish a connection with the mobile device in the list.

At step 530, at least one list of messages is sent to at least one recipient determined at step 520.

According to embodiments, firstly information about all available and relevant voice messages is sent to the recipient. Further, in some embodiments, firstly a lightweight representation of the messages may be sent to the recipient followed by the messages themselves. For instance, firstly only the list of messages may be sent to the recipient, wherein the messages themselves are sent at a second step, for instance, in response to a request received from the recipient. According to embodiments, each message may comprise a voice message and metadata associated with the voice message. In some embodiments, each message may also comprise, in addition to the voice message and the metadata, the location data included in the original received message at step 510.

In some embodiments, the mobile devices 110, 120 and 130 generate at predetermined time intervals registration messages which are sent to the central server 150. The registration messages comprise metadata and at least one of a determined geographic position of the mobile device sending the registration message and the route of the mobile device sending the registration message. In some embodiments, each mobile device 110, 120, 130 may determine at least one of its geographic position and its route. In other embodiments, only the current geographic position of a mobile device 110, 120, 130 and the destination is provided by the mobile device 110, 120, 130, whereas the route, e.g. from the current position to the destination, is calculated by the central server 150 and provided to the mobile device by the central server 150.

The metadata for the registration messages may comprise the data maintained at the central server, i.e. an area, a set geographic position of a mobile device, a route of a mobile device, a destination of a mobile device, a time period at which voice messages were recorded, a category of voice messages, priority of voice messages, target audience of voice messages and other as described above with regard to step 520. Additionally, the metadata may comprise a current location of the device sending the registration message. At least part of the metadata for the registration message may be manually input at the mobile device. For instance, a user of the mobile device may enter a location name (such as a city name, city name with address or city name with cross-roads) at the mobile device or may interact with a map on the mobile device to set a geographic position. As another example, the user may input or select a category at the mobile device.

Discussing some examples of use, as explained above with regard to Fig. 2, recorded voice messages may, for instance, relate to road conditions observed by the user recording the voice message at the current or past geographic position of the mobile device recording the voice message, to information on the route guided by the mobile device on which the voice message has been recorded etc. Hence, the invention may serve as traffic information system having very recent traffic information to a user of a mobile device receiving the voice message as described with respect to Figure 3. In addition, if the user of the mobile device receiving the voice message is interested in further information from the user of the mobile device on which the voice message has been recorded, a peer to peer connection may be established for further information exchange as described with regard to Figure 4.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the scope of the invention. In addition, those areas in which it is believed that those of ordinary skill in the art are formula have not been described therein in order to not unnecessarily obscure the invention described therein. Accordingly, it is to be understood that the invention is not to be limited by the specific illustrative embodiments, but only the scope of the appended claims.

## Claims

1. A computer-implemented method on a device in a vehicle for sending information to another device in another vehicle, the method comprising:
recording (210) a voice message;
determining a geographic position of the device in the vehicle;
generating (220) location data, the location data comprising the determined geographic position of the device in the vehicle;
generating metadata, the metadata being associated with the recorded voice message;
generating (230) a message comprising the voice message, the location data and the metadata; and
sending (240) the message to at least one of a central server and another device in another vehicle.

2. The computer-implemented method of claim 1, further comprising determining at least one of a destination and a route of the device in the vehicle and wherein the generated message further comprises the determined at least one of the destination and the route of the device in the vehicle.

3. The computer-implemented method of one of claims 1 or 2, wherein the metadata comprises at least one of an identification of the device in the vehicle, an identification of an author of the recorded voice message, a time of recording of the voice message, priority of the recorded voice message, category of the recorded voice message and intended recipients of the recorded voice message.

4. The computer-implemented method of one of claims 1 to 3, further comprising determining a speed of the device in the vehicle and a direction of movement of the device in the vehicle and wherein the location data further comprises the determined speed and the determined direction of movement of the vehicle.

5. A computer-implemented method on a device in a vehicle, the method comprising:
receiving (310) a list of messages and the messages in the list of messages, the list of messages having been filtered based on at least one of a current geographic position, a past geographic position, a route and a destination of the device in the vehicle, each message in the list of messages comprising a voice message and metadata associated with the voice message;
playing back (320) at least one voice message of at least one received message; and
accessing (330) metadata of at least one received message.

6. The computer-implemented method of claim 5, wherein the metadata comprises at least one of an identification of another device in another vehicle having recorded the voice message, an identification of an author of the voice message, a time of recording of the voice message, a priority of the voice message, a category of the voice message and intended recipients of the voice message.

7. The computer-implemented method of one of claims 5 and 6, the method further comprising:
determining a current geographic position of the device in the vehicle and a destination of the device in the vehicle, a route from the current geographic position to the destination being a current route of the device in the vehicle;
receiving a list of other devices in other vehicles, each other device in the list of other devices in other vehicles being associated with at least one of a route and a destination that is within the current route or close to the current route;
presenting the list of other devices in other vehicles on the device in the vehicle; and
communicating with at least one of the other devices in the list of other devices in other vehicles.

8. The computer-implemented method of claim 7, wherein communicating with at least one of the other devices comprises:
communicating in real time with at least one of the other devices using voice over IP; or
communicating with at least one of the other devices by exchanging private voice messages.

9. The computer-implemented method of one of claims 5 to 8, further comprising:
determining at least one of a geographic position of the device in the vehicle and a route of the device in the vehicle
generating metadata comprising at least one of an area, a set geographic position of other devices in vehicles, a route of other devices in vehicles, a destination of other devices in vehicles, a time period at which voice messages were recorded at other devices in vehicles, a category of voice messages, a priority of voice messages and a target audience of voice messages;
sending a registration message to a central server, the registration message comprising the metadata and the at least one determined geographic position of the mobile device and the route of the mobile device.

10. The method of one of claims 5 to 9, further comprising the steps of one of claims 1 to 4.

11. A computer-readable medium having computer-executable instructions that, when executed by a computer, cause the computer to perform a method on a device in a vehicle comprising:
receiving (410) a list of other devices in other vehicles, each other device in the list of other devices in other vehicles being associated with at least one of a route and a destination that is within the current route or close to the current route of the device in the vehicle;
displaying (420) the list of other devices in other vehicles on the device in the vehicle; and
communicating with at least one of the other devices in the list of other devices in other vehicles.

12. The computer-readable medium of claim 11, further having computer-executable instructions that cause the computer to perform the method of one of claims 5 to 8,10 and 1 to 4.

13. A computer-readable medium having computer-executable instructions that, when executed by a computer, cause the computer to perform a method on a device in a vehicle comprising:
recording (210) a voice message;
determining a geographic position of the device in the vehicle;
generating (220) location data, the location data comprising the determined geographic position of the device in the vehicle;
generating metadata, the metadata being associated with the recorded voice message;
generating (230) a message comprising the voice message, the location data and the metadata; and
sending (240) the message to at least one of a central server and another device in another vehicle.

14. A server computer adapted to:
receive (510) a plurality of messages, each message of the plurality of messages comprising a voice message, location data of a sender of the message and metadata associated with the voice message;
maintain data associated with a plurality of devices in vehicles, wherein the data comprises for each device of the plurality of devices in vehicles location data of the device;
determine (520) recipients from the plurality of devices in vehicles for the received messages based on location data of senders of the messages and the maintained data;
for each recipient, generate a list of messages, the list of messages listing all messages for which the respective device in the vehicle has been determined to be the recipient; and
send (530) at least one list of messages to at least one determined recipient.

15. A device in a vehicle adapted to perform the method of one of claims 1 to 10.
